# EUROPEAN PATENT APPLICATION

(11) **EP 2 194 740 A1**
(43) Date of publication of application: **09.06.2010**
(21) Application number: 08105927.1
(22) Date of filing: 03.12.2008
(51) Int. Cl.: H04W 16/04

(54) **Method and device for data processing in a mobile communication network**

(71) Applicant: Nokia Siemens Networks Oy, 02610 Espoo (FI)
(72) Inventor: Schulz, Egon, Dr., 80993, München (DE); Zirwas, Wolfgang, 81249, München (DE)
(74) Representative: Bruglachner, Thomas E.

(57) **Abstract**

A method and a device for data processing in a mobile communication network are provided, said method comprising the steps of (i) at least one base station supplies several sectors, each sector via at least one antenna port; (ii) a border area between sectors is supplied by at least two antenna ports associated with adjacent sectors; and (iii) a frequency band is sub-divided to provide frequency ranges for the border areas of each sector.

## Description

The invention relates to a method and to a device for data processing in a mobile communication network.

Regarding cellular systems like 3GPP LTE, extensions towards LTE release 8 standard are discussed for future releases like LTE release 9 or IMT advanced.

Fully cooperative antenna systems (COOPA) or fully cooperative MIMO systems may overcome or tremendously reduce inter-cell interference as well as to allow for improved radio channels.

However, full cooperation is rather not practical due to channel state information (CSI) to be made available to a huge number of base stations (BS) thereby producing a large amount of feedback overhead, especially in case of frequency division duplex (FDD) systems. Furthermore, a large amount of data would have to be processed by the backbone network, which would generate a lot of costs in terms of CAPEX and OPEX. Another detrimental effect may stem from the fact that a large amount of data on the backbone network is necessary for organizing inter base station cooperation, thereby also increasing costs in terms of CAPEX and OPEX.

The **problem** to be solved is to suggest an efficient solution for a cooperation of mobile terminals with antenna systems, in particular an inter-sector cooperation for release 8 conform user equipments in case of an odd number of sectors.

This problem is solved according to the features of the independent claims. Further embodiments result from the depending claims.

In order to overcome this problem, a method for data processing in a mobile communication network is provided
- wherein at least one base station supplies several sectors, each sector via at least one antenna port;
- wherein a border area between sectors is supplied by at least two antenna ports associated with adjacent sectors;
- wherein a frequency band is sub-divided to provide frequency ranges for the border areas of each sector.

It is noted that said base station may be an evolved NodeB (eNB), a NodeB (NB) or any antenna system comprising antenna elements or antenna ports, wherein each sector may preferably be assigned to at least two antenna elements or antenna ports. Such base station may in particular be or comprise a remote radio head (RRH).

Advantageously, the border areas of each sector can be supplied by antenna ports of different sectors thereby improving the mobile terminal's reachability at the borders of each sector. This also allows for a logical partitioning of the frequency bands utilized within a single sector (e.g., by a base station via its antenna ports or antenna elements): Frequency sub-bands can be set up depending on local segments within a sector. The mobile terminal may efficiently utilize such sub-bands depending on its actual position.

It is noted that the antenna port may be used in LTE terminology and it may indicated that reference signals can be transmitted from such antenna port. In case of common reference signals, the antenna ports can be connected with different physical antennas. However, in addition there may be an "antenna port 5", which is a dedicated reference signal. On the other hand, antenna element may refer to or be associated with any kind physical antenna or portion thereof.

The mobile terminal may be any device with a radio component that allows interworking with the mobile communication network. It may in particular be a cell/mobile phone, a personal digital assistant, a personal computer (desktop or notebook) or any other device with a mobile interface, e.g., a mobile interface card.

In an embodiment, the several sectors span around the at least one base station

Hence, the sectors at least partially cover the areas around the base station or antenna system.

In a further embodiment, the frequency band is sub-divided into frequency ranges which are adapted over time in particular dependent on the data traffic within the sectors.

Advantageously, time intervals may be used to schedule the traffic in sub-bands of the frequency domain thereby efficiently utilizing the available resources with regard to the actual demand for bandwidth in particular depending on the positions of the mobile terminals.

In a next embodiment, the at least one base station supplies at least three sectors. In particular, the at least one base station may supply an odd number of sectors.

It is also an embodiment that each sector is supplied by a base station.

Pursuant to another embodiment, the sectors share a segment of a circle, each sector being a portion of the segment with a predefined overlap between the sectors.

Hence, the segment of a circle may efficiently surround the base station. It is a particular solution that the segment spans 360° around the base station.

According to an embodiment, a central portion of the sub-divided frequency band supplies mobile terminals in an area around the center of the sector.

According to another embodiment, the central portion of the sub-divided frequency band supplies broadcast information, in particular also to the border areas of the sector.

Hence, the central portion conveys broadcast information towards the whole sector thereby allowing the receiving mobile terminal to become aware of the sub-frequency band at the overlap areas around the borders of the sector.

In yet another embodiment, the sub-divided frequency portions of border areas of adjacent sectors can be combined to provide data to be conveyed towards a mobile terminal located in such area.

According to a next embodiment, the at least one base station processes, in particular receives, mobile terminal specific information in the relevant frequency bands.

Pursuant to yet an embodiment, said mobile terminal specific information comprises preferred matrix indices feedback and/or channel quality indicators.

According to yet an embodiment, the mobile terminal is a user equipment, in particular a release 8 or above compatible user equipment.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with a network node, in particular at least one base station.

The problem stated supra is further solved by a communication system comprising the device as described herein.

Embodiments of the invention are shown and illustrated in the following figures:
- Fig.1: shows an exemplary diagram comprising a solution for cooperative transmission (COOPA) based on joint transmission;
- Fig.2: shows a symbolic arrangement of an antenna system or base station with three sectors supplying two user equipments comprising a hidden MU MIMO cooperation at cell borders;
- Fig.3A: shows an arrangement of a base station or antenna system providing three sectors enabling hidden inter-sector cooperation at each border area between sectors;
- Fig.3B: shows a frequency-time diagram visualizing how the frequency domain can be sub-divided into sub-bands that can be utilized for different portions or areas within a sector.

COOPA based on an (evolved) intra NodeB (eNB, NB) cooperation between adjacent sectors of a site appears to be a promising solution as a basic cooperation scheme, in particular because it can be implemented without any backbone network.

Also, distributed antenna systems (DAS) may be applicable, wherein the antenna elements (AE) of each sector are spatially distributed. The transmitting stations, e.g., deployed as remote radio heads (RRH), are connected with the base band unit at the eNB site over fibers, but without involvement of the backbone network.

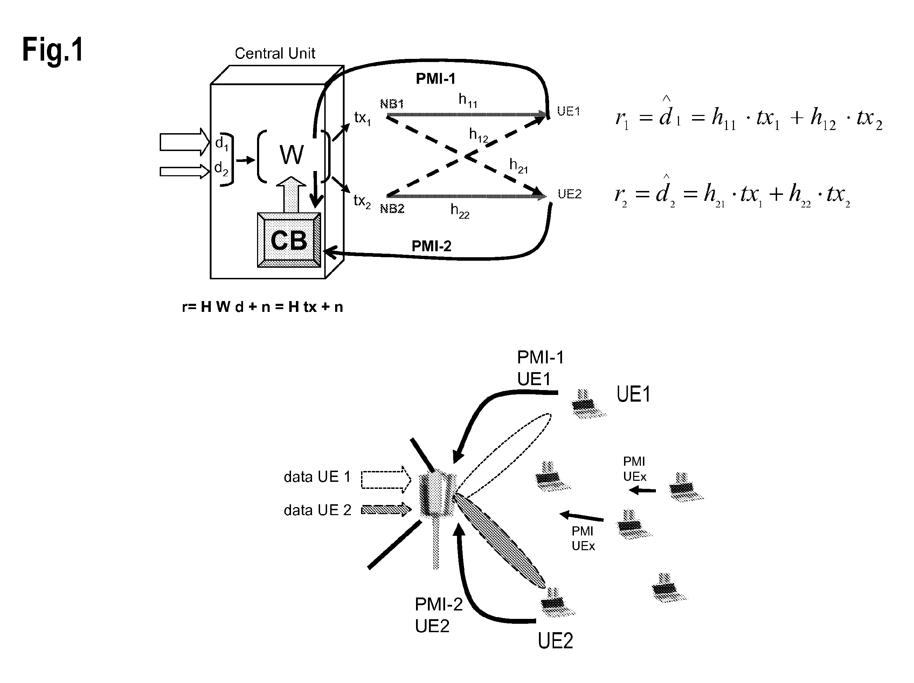

A basic cell of any cooperation area (CA) comprising two cooperating eNBs and two UEs is shown in **Fig.1****.**

In case of an intra-eNB cooperation, a central unit (CU) is located at one site serving two eNBs of adjacent sectors.

The CU performs common signal precoding, which may comprise a matrix multiplication of all data signals with a precoding matrix **W.** In case of zero forcing (ZF), the matrix **W** is a pseudo inverse matrix **H⁺** of the overall channel matrix **H.** An example of a CA for a codebook-based precoding is depicted in Fig.1. In such case, the precoding matrix **W** is selected from a codebook based on different preferred matrix indices (PMI) feedback, i.e. PMI 1 and PMI 2 from user equipments UE 1 and UE 2.

There may be two different implementation strategies for a cooperation area (CA):
i) Each cooperating radio station is regarded as an additional radio cell with a different cell ID, different reference signal (RS) patterns, different primary broadcast channel (PBCH), etc.; or
ii) the cooperation is hidden as a multi user (MU) MIMO downlink transmission, where one or two antenna ports (APs) belong to one sector and the other antenna ports are associated with at least one other sector.

In case i) new protocol messages and new UE feedback can be utilized, e.g., for the feedback of precoding matrix indices (PMIs) and channel quality indicators (CQIs) for two different cell IDs, while in case ii) the cooperation can be achieved for release 8 conform UEs. Also, performance gains could be smaller compared to a full blown cooperation with a new and larger codebook.

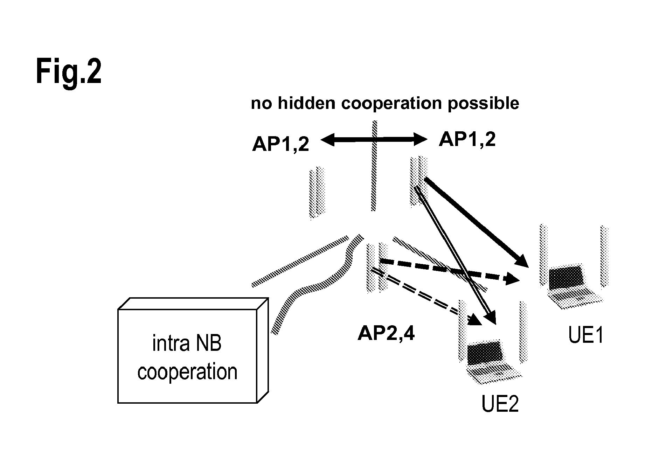

**Fig.2** shows an assignment of RS patterns to sectors (in this example, a baseline 2x2 MIMO is assumed per sector) for inter sector cooperation at cell borders. At the sector borders same RS patterns - as well as same RS phase shifts sectors - may have to be used, which at least for this cell avoids a "border-hidden" multi-user (MU) MIMO cooperation.

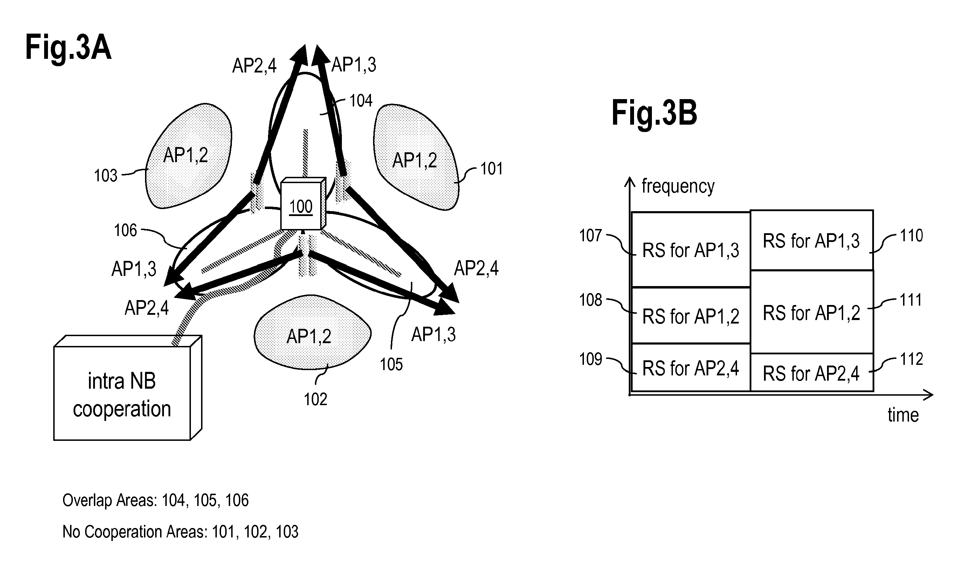

**Fig.3A** shows a concept for a hidden inter-sector cooperation based on MU MIMO approach in particular with release 8 conform UEs.

A base station or (evolved) NodeB 100 spans three sectors, wherein each sector has different cooperation areas:
a) Areas 101, 102, 103 are for UEs within a center of the sectors; such areas are exposed to small interference only from adjacent sectors. Data can be conveyed without utilizing any cooperation.
b) Areas 104, 105, 106 may utilize cooperation with either the left or the right adjacent sector. Advantageously, different reference signals (RS) are used for UEs at left and right borders of the sector.

It is noted that said base station or (evolved) NodeB 100 may as well be an antenna system comprising antenna elements or antenna ports, wherein each sector being assigned to at least two antenna elements or antenna ports. Such node 100 may in particular be or comprise a remote radio head (RRH).

Hence, the frequency band can be divided into three sub-portions 107 to 109 or 110 to 112 as shown in **Fig.3B****.** The partitioning of the frequency band can be different for varying time slots or time intervals.

A central portion 108 or 111 of the frequency band providing a resource block (RB) is assigned an RS pattern for antenna ports AP1 and AP2. Such portion 108 or 111 may supply UEs within the center areas 101 to 103 as well as it may supply PBCH information to all users.

The UEs cooperating with the left or the right border of a sector are provided with different RS patterns 107, 110 or 109, 122 so that at each inter sector border area 104 to 106 all RSs for AP1 to AP4 are available for a UE.

Additionally, the number of resource elements (RE) for AP1 and AP2 may be higher than for AP3 and AP4, hence AP1 and AP3 or AP2 and AP4 may be combined at the areas 104 to 105 thereby allowing that the cooperating sectors have the same channel estimation accuracy compared to areas 101 to 103.

The number of RBs per each sub-part or portion of the frequency bands may differ over time depending on the number of UEs located at the left or right border of the cell. This is indicated in Fig.3B by the different portioning of the frequency band during a first time interval comprising the RSs 107 to 109 and during a second time interval comprising the RSs 110 to 112.

In order to avoid the UEs mixing up different APs transmitting the same RS pattern, the eNB may restrict precoding matrix indices (PMI) and channel quality indicators (CQIs) to be conveyed towards the UEs to their destined frequency bands. This may in particular be useful for top M feedback approaches in order to avoid useless feedback traffic.

Advantageously, for the UEs the proposal is fully transparent and thus compatible with release 8. Regarding the eNBs, only minor adaptations are necessary that could be implemented, e.g., by software update.

Hence, this approach allows a hidden multi-user (MU) MIMO-based inter sector or distributed antenna systems (DAS) cooperation. Hidden in particular means that LTE R8 UEs can be immediately supported by this proposal.

It is another advantage that inter-sector cooperation for LTE R8 UEs on both sector borders can be supported. Further, the PBCH is transmitted at the center of the frequency band so that all UEs in the cell may become aware of such broadcast information. Also, the size of the sub-bands can be adapted to different load conditions, in particular on a time-interval basis.

### List of Abbreviations:

- A&F: amplify and forward
- AE: antenna element
- AP: antenna port
- BS: base station
- CDD: cyclic delay diversity
- CQI: channel quality indicator
- CSI: channel state information
- D&F: decode and forward
- DAS: distributed antenna systems
- DL: downlink
- eNB: evolved NB
- FDD: frequency division duplexing
- GI: guard interval
- HARQ: hybrid automatic repeat request
- IMT: international mobile telecommunications
- LOS: line of sight
- LTE: long-term evolution
- MCS: modulation and coding scheme
- MIMO: multiple input multiple output
- MS: mobile station
- NB: Node B
- OFDM: orthogonal frequency division multiplexing
- OFDMA: orthogonal frequency division multiple access
- PBCH: primary broadcast channel
- PMI: precoding matrix indices
- R8: release 8
- RB: resource block
- RE: resource element
- RN: relay node
- RS: reference signal
- SC: subcarrier
- TDM: time domain multiplexing
- UE: user equipment
- UL: uplink
- ZF: zero forcing

## Claims

1. A method for data processing in a mobile communication network,
- wherein at least one base station supplies several sectors, each sector via at least one antenna port;
- wherein a border area between sectors is supplied by at least two antenna ports associated with adjacent sectors;
- wherein a frequency band is sub-divided to provide frequency ranges for the border areas of each sector.

2. The method according to claim 1, wherein the several sectors span around the at least one base station.

3. The method according to any of the preceding claims, wherein the frequency band is sub-divided into frequency ranges which are adapted over time in particular dependent on the data traffic within the sectors.

4. The method according to any of the preceding claims, wherein the at least one base station supplies at least three sectors.

5. The method according to any of the preceding claims, wherein the at least one base station supplies an odd number of sectors.

6. The method according to any of the preceding claims, wherein each sector is supplied by a base station.

7. The method according to any of the preceding claims, wherein the sectors share a segment of a circle, each sector being a portion of the segment with a predefined overlap between the sectors.

8. The method according to any of the preceding claims, wherein a central portion of the sub-divided frequency band supplies mobile terminals in an area around the center of the sector.

9. The method according to claim 8, wherein the central portion of the sub-divided frequency band supplies broadcast information, in particular also to the border areas of the sector.

10. The method according to any of the preceding claims, wherein the sub-divided frequency portions of border areas of adjacent sectors are combined to provide data to be conveyed towards a mobile terminal located in such area.

11. The method according to any of the preceding claims, wherein the at least one base station processes mobile terminal specific information in the relevant frequency bands.

12. The method according to claim 11, wherein said mobile terminal specific information comprises preferred matrix indices feedback and/or channel quality indicators.

13. The method according to any of the preceding claims, wherein the mobile terminal is a user equipment, in particular a release 8 or above compatible user equipment.

14. A device comprising a and/or being associated with a processor unit and/or a hard-wired circuit and/or a logic device that is arranged such that the method according to any of the preceding claims is executable thereon.

15. The device according to claim 14, wherein said device is a communication device, in particular a or being associated with a network node, in particular at least one base station.
